# EUROPÄISCHE PATENTSCHRIFT

(11) **EP 2 868 487 B1**
(45) Veröffentlichungstag und Bekanntmachung des Hinweises auf die Patenterteilung: **14.12.2016**
(21) Anmeldenummer: 14187561.7
(22) Anmeldetag: 02.10.2014
(51) Int. Cl.: B44B 5/00, B32B 38/06, B32B 38/18, B44C 1/24, B44C 5/04

(54) **Verfahren und Vorrichtung zur Herstellung eines dekorsynchron geprägten, insbesondere laminierten, Verbundmaterials**
Method and device for producing a composite material that is embossed in register, in particular a laminated material
Procédé et dispositif destinés à la fabrication d'un matériau composite, en particuler laminé, embossé avec repérage

(30) Priorität: 16.10.2013 DE 102013111419; 27.01.2014 DE 102014100915; 07.02.2014 DE 102014101554
(43) Veröffentlichungstag der Anmeldung: 06.05.2015
(73) Patentinhaber: OLBRICH GmbH, 46395 Bocholt (DE)
(72) Erfinder: Josten, Andre, 46399 Bocholt (DE); Klas, Ernst, 41844 Wegberg (DE); Robeling, Dirk, 46395 Bocholt (DE); Klein-Heßling, Herbert, 46414 Rhede (DE)
(74) Vertreter: Viering, Jentschura & Partner mbB Patent- und Rechtsanwälte

(56) Entgegenhaltungen:
- EP-A1- 2 636 524
- EP-B1- 0 165 824
- WO-A1-93/03917
- GB-A- 2 036 649
- US-B1- 6 272 982

## Beschreibung

Die Erfindung richtet sich auf ein Verfahren zur Herstellung eines registerhaltig geprägten Verbundmaterials, umfassend das Laminieren oder Kaschieren mindestens zweier bahnförmiger Materiallagen zu einem Verbundmaterial und ein nachfolgendes registerhaltiges Prägen des Verbundmaterials in einer Prägevorrichtung durch welche das Verbundmaterial hindurchgeführt wird, wobei eine erste, ein sich nach einer Registerlänge wiederholendes Druckbild aufweisende Materiallage mit einer die erste Materiallage stabilisierenden zweiten Materiallage laminiert oder kaschiert wird und dem Druckbild des Verbundmaterials in der Prägevorrichtung registerhaltig ein Prägebild aufgeprägt wird, wobei das Verbundmaterial der Prägevorrichtung unter Einstellung einer Längenanpassung von Druckbild und Prägebild zugeführt wird. Schließlich richtet sich die Erfindung auf eine Vorrichtung zur Durchführung eines solchen Verfahrens.

Im Gebiet der Bodenbeläge und Dekorfolien ist es bekannt, Oberflächen mittels Bedrucken von Folien zu erzeugen. Hierbei ist es zudem bekannt, die mit dem Druckbild versehene Folie auf eine eine oder mehrere übereinander gelagerte Glasfaserschichten aufweisende, die bedruckte Folie verstärkende und/oder stabilisierende Materiallage (auf)zulaminieren. Um eine noch realistischere und authentischere Oberflächenbeschaffenheit bei einem derartigen Verbundmaterial zu erzeugen, ist es weiterhin bekannt, ein solches Verbundmaterial registergenau dem Druckbild entsprechend mit einer Prägung zu versehen. Dies wird als registerhaltiges Prägen oder Synchronprägen oder rapporthaltiges Prägen bezeichnet.

Aus der US 2012/0097315 A1 ist ein solches registerhaltiges Prägen eines laminierten Verbundmaterials bekannt. Hierbei wird das laminierte Verbundmaterial zwischen einer Prägewalze und einer zugeordneten Anpresswalze hindurch bewegt. Um ein registerhaltiges Prägen zu erreichen, muss die auf dem Verbundmaterial abgebildete Registerlänge des Druckbildes an die Prägelänge des auf der Prägewalze ausgebildeten Prägebildes regelmäßig angepasst werden. Hierzu wird in der US 2012/0097315 A1 vorgeschlagen, das Verbundmaterial in einem plastischen Zustand der Prägewalze zuzuführen und zwischen der Prägewalze und der Anpresswalze hindurchzuführen sowie hierbei zur registerhaltigen Anpassung von Druckbild und Prägebild die Prägewalze in Bezug auf ihre Rotationsgeschwindigkeit und/oder ihre Position und Lage so zum Verbundmaterial zu verstellen, dass ein registergenaues Prägen möglich ist. Außerdem wird eine Temperaturkontrolle der Prägewalze offenbart, um den Durchmesser der Prägewalze konstant halten zu können. In diesem Dokument wird somit ein kontinuierlicher Fertigungsprozess zum registerhaltigen Prägen von laminierten Produkten mittels eines Prägekalanders beschrieben, bei welchem zur Ausbildung einer registerhaltigen Prägung die Synchronisation zwischen Druckbild und Prägezylinder durch eine Relativbewegung des Prägezylinders zur Substratbahn während des Prägeprozesses erreicht wird. Um diese Relativbewegung zu ermöglichen, wird der Prägezylinder insbesondere entweder von der Substratbahn kurzfristig abgefahren oder es wird ein verminderter Prägedruck eingestellt. Diese Korrekturmaßnahme führt auf der Substratbahn zu einem veränderten Prägebild. Auf diese Weise wird das Prägebild an die Registerlänge des Druckbildes angepasst, eine gegebenenfalls wünschenswerte Veränderung der Länge des Druckbildes wird nicht durchgeführt. Und auch die sich nach dem Durchlaufen der Prägewalze gegebenenfalls einstellende elastische Entspannung des Verbundmaterials bleibt unberücksichtigt. Dies kann dazu führen, dass das Verbundmaterial mit einer elastischen Längsdehnung durch die die Prägewalze aufweisende Prägevorrichtung hindurchgeführt und beispielsweise dem Druckbild entsprechend mit quadratischen Einprägungen versehen wird. Entspannt sich nach dem Durchlaufen der Prägevorrichtung das Verbundmaterial aber wieder, so verformen sich aufgrund der elastischen Rückstellkräfte des Verbundmaterials die quadratischen Prägungen zu leicht rechteckigen Prägungen.

Von Vorteil ist es daher, die Registerlänge des Druckbildes auf die Länge des Prägebildes der Prägewalze abzustimmen. Ein solches Verfahren zum registerhaltigen Prägen von Tapeten ist aus der GB 2 036 649 A bekannt. Ebenso offenbaren die US 4,612,074 A und die US 4,773,959 A ein Verfahren zum registerhaltigen Prägen eines als Bodenoberfläche verwendbaren Verbundmaterials sowie eine zur Herstellung dieses geprägten, laminierten Verbundmaterials geeignete Vorrichtung und somit insgesamt ein gattungsgemäßes Verfahren, eine gattungsgemäße Verwendung und eine gattungsgemäße Vorrichtung. Mit den aus der GB 2 036 649 A, der US 4,612,074 A und der US 4,773,959 A bekannten Verfahren und Vorrichtungen lässt sich zwar durch eine längengesteuerte Längsdehnung des Verbundmaterials die Registerlänge des Druckbildes an die Länge des Prägebildes anpassen, dennoch verbleiben verbesserungswürdige Unzulänglichkeiten. So führt das Prägen des Verbundmaterials in einem elastisch längsgedehnten Zustand dazu, dass nach der Durchführung des Prägevorganges sich wieder das vor der elastischen Längsdehnung bei dem vorhergehenden Laminierprozess auflaminierte Druckbild ergibt, d. h. nach der Zugentlastung des Verbundmaterials stellt sich wieder die Registerlänge des Druckbildes ein, die mit dem laminierten Verbundmaterial der Prägewalze zugeführt wird. Diese Registerlänge ist aber häufig fehlerhaft und entspricht nicht der gewünschten Registerlänge, da bei vorhergehenden Prozessen wie dem Bedrucken der das Druckbild aufweisenden Materiallage und dem (Auf)laminieren dieser ersten Materiallage auf eine zweite Materiallage Fehler und Ungenauigkeiten entstehen können. Beim Stand der Technik werden Längenunterschiede im Printfilm/Druckfilm nicht korrigiert und führen zu Unterschieden in dem fertigen Produkt. So kann bereits das auf die erste Materiallage aufgedruckte Druckbild mit unregelmäßigen Registerlängen aufgedruckt sein, wenn beispielsweise die erste Materiallage mit unterschiedlichen Geschwindigkeiten oder einer unterschiedlichen Längsdehnung oder einer unterschiedlichen Temperatur an einer oder mehreren Druckwalzen beim vorhergehenden Drucken des Druckbildes vorbeigeführt wird. Auch beim (Auf)laminieren der das Druckbild aufweisenden ersten Materiallage auf eine stabilisierende zweite Materiallage kann es aufgrund von Temperaturschwankungen, Drehzahlungenauigkeiten oder ähnlichem dazu kommen, dass dadurch ein Verbundmaterial mit nicht konstanter Registerlänge des Druckbildes geschaffen wird. Dies führt bei den aus dem Stand der Technik bekannten Verfahren dazu, dass relativ häufig eine längengesteuerte Veränderung der Längsdehnung des Verbundmaterials vorgenommen werden muss, um die jeweils vorgelegte Registerlänge an die bei einer gleichbleibenden Temperatur der Prägewalze konstant bleibende Länge des Prägebildes zu Ermöglichung einer registerhaltigen Prägung anzupassen. Dies erfordert eine recht aufwendige Regeltechnik und verschleißfördernde Drehzahl- und/oder Lageveränderung von Prägewalze und einem das Verbundmaterial zuführenden Trommelelement, beispielsweise einer Laminiertrommel.

Des Weiteren besteht häufig, beispielsweise bei der Herstellung von Oberflächen für Fußbodenlaminate, die Problematik, dass die durch das Auflaminieren eine bedruckte erste Materiallage fixierende und stabilisierende zweite Materiallage aus einem Material, beispielsweise einem Glasfaservlies, besteht, das nur eine relativ geringe Verformungsfähigkeit aufweist. Wird z. B. ein eine Glasfaservliesschicht aufweisendes Verbundmaterial auf über ein Prozent seiner Ausgangslänge längsgedehnt, stellt sich eine partielle Zerstörung des Glasvlieses in Form von Rissen und Stabilitätsverlusten im Material ein. Dies kann dazu führen, dass die Längsdehnungsfähigkeit dieser Materiallage gegebenenfalls nicht ausreicht, um die aufgrund des Druckbildes notwendige Registerlängenanpassung des Druckbildes an die Länge des Prägebildes mittels einer entsprechenden Längsdehnung des Verbundmaterials durchführen zu können. Aber auch wenn das Längsdehnungsvermögen einer solchen Materiallage ausreichend sein sollte, so sind dafür hohe Dehnkräfte notwendig, um eine solche Materiallage auf die gewünschte Registerlänge längsdehnen zu können. Diese Dehnkräfte können beispielsweise 1000 N/m bei Fußbodenmaterialien betragen, was entsprechend ausgestaltete Maschinen und Anlagen, insbesondere eine Sonderkonstruktion der Laminier- und Prägeanlage, notwendig macht. Eine maschinenbautechnische Ausbildung geeigneter Anlagen, die derartige Kräfte aufbringen können, bringt aber deutlich höhere Kosten und einen höheren konstruktiven Aufwand mit sich, als dies bei Anlagen der Fall ist, die lediglich Kräfte für eine geringe oder fast gar nicht notwendige Längsdehnung eines solchen nur begrenzt elastisch längsdehnbaren Materials bereitstellen muss.

Der Erfindung liegt daher die Aufgabe zugrunde, eine Lösung zu schaffen, die ein verbessertes und konstruktiv, anlagentechnisch sowie regelungstechnisch aufwandsarm realisierbares und handhabbares Verfahren zur Herstellung eines registerhaltig geprägten insbesondere laminierten oder kaschierten, und vielfältig verwendbaren Verbundmaterials bereitstellt oder die Anwendung eines solchen Verfahrens ermöglicht.

Bei einem Verfahren der eingangs näher bezeichneten Art wird diese Aufgabe in der EP 2 636 524 A1 dadurch gelöst, dass durch Einstellung des Druckbildes der ersten Materiallage auf eine gewünschte, über die Bahnlänge der ersten Materiallage konstante Registerlänge mittels einer registerlängengesteuerten elastischen und/oder plastischen Längsdehnung der ersten Materiallage und durch ein fixierendes Verbinden, insbesondere Laminieren oder Kaschieren, der derart längsgedehnten ersten Materiallage mit der stabilisierenden zweiten Materiallage ein Verbundmaterial mit einem über seine Bahnlänge die gewünschte konstante Registerlänge aufweisenden Druckbild hergestellt wird.

Die EP 2 636 524 A1 offenbart ein Verfahren gemäß dem Oberbegriff von Anspruch 1 und eine Vorrichtung gemäß dem Oberbegriff von Anspruch 19.

Erfindungsgemäß wird die vorstehende Aufgabe gelöst durch ein Verfahren gemäß Anspruch 1.

Des Weiteren wird die vorstehende Aufgabe gelöst durch eine Vorrichtung mit den Merkmalen des Anspruches 19.

Vorteilhafte Weiterbildungen und zweckmäßige Ausgestaltungen sind Gegenstand der jeweiligen Unteransprüche.

Zur Lösung der vorstehenden Aufgabe schlägt die Erfindung also vor, zweistufig vorzugehen und zwar zunächst in einer ersten Stufe eine konstante Registerlänge eines Druckbildes durch elastische und/oder plastische Längsdehnung einer das Druckbild aufweisenden Materiallage zu schaffen und durch Verbindung mit einer diese stabilisierenden zweiten Materiallage in einem Verbundmaterial zu fixieren. In einer zweiten Verfahrens-, Prozess- oder Vorrichtungsstufe wird dann dieses Verbundmaterial, das eine konstante Registerlänge des Druckbildes aufweist, durch eine elastische oder plastische Längenanpassung in Form einer Längsdehnung oder eines Schrumpfens der Materialbahn des Verbundmaterials derart an die Länge des Prägebildes des Prägewerkzeuges angepasst, dass Druckbildlänge und Prägebildlänge zur Durchführung eines registergenauen Prägens zumindest im Wesentlichen übereinstimmen. Etwaige Unregelmäßigkeiten in der Registerlänge des auf eine erste, insbesondere elastisch dehnbare Materiallage aufgedruckten Druckbildes werden so bereits bei der Herstellung des diese erste Materiallage aufweisenden Verbundmaterials beseitigt oder zumindest berücksichtigt und durch eine registerlängengesteuerte elastische und/oder plastische Längenanpassung, insbesondere Längsdehnung, dieser ersten Materiallage wird eine gewünschte konstante Registerlänge des Druckbildes eingestellt. Diese erste Materiallage wird hierbei dann in diesem in diesem Längsdehnungszustand durch Verbinden mit der zweiten Materiallage fixiert. Insbesondere geschieht dies durch ein (Auf)laminieren auf die stabilisierende zweite Materiallage. Damit wird also in einem ersten Prozessschritt in einem ersten Anlagenbereich ein Verbundmaterial geschaffen, das über seine gesamte Bahnlänge ein Druckbild mit einer konstanten Registerlänge trägt. Dieses Verbundmaterial wird dann in einem nachfolgenden zweiten Prozessschritt in einem zweiten Anlagenbereich einer Prägevorrichtung und hier insbesondere einer Prägewalze zugeführt, mittels welcher nun ein registerhaltiges Prägen des vorgelegten Druckbildes durchgeführt wird. Hierzu ist die im Verbundmaterial eingestellte Registerlänge des Druckbildes zumindest im Wesentlichen auf die Länge des in der Druckvorrichtung und insbesondere auf der Prägewalze ausgebildeten Prägebildes abgestimmt. Zur Durchführung der registerhaltigen Prägung ist somit in diesem zweiten Prozessschritt dann lediglich nur noch eine - insbesondere zum vorbekannten Stand der Technik - geringfügige, vorzugsweise reversible, insbesondere elastische, oder plastische Längsdehnung oder ein Schrumpfen des Verbundmaterials oder eine entsprechende Lageveränderung der Prägewalze oder des Prägewerkzeugs zur Anpassung der Registerlänge des vorgelegten Druckbildes an die Länge des Prägebildes des Prägewerkzeuges, insbesondere Prägewalze, der Prägevorrichtung zur Sicherstellung einer registerhaltigen Prägung notwendig. Insbesondere ist in diesem zweiten Prozessschritt damit in der Regel eine lediglich geringfügige Längenanpassung der gegebenenfalls aus einem nur begrenzt elastisch längsdehnbaren Material bestehenden oder ein solches Material aufweisenden zweiten Materiallage - und damit des Verbundmaterials - notwendig, so dass maschinentechnische Anlagen ausreichen, die bezüglich der erzeugbaren Längszugkräfte keine Sonderkonstruktionen zu sein brauchen. Auch bewegt sich die gegebenenfalls notwendige und bei Durchlaufen des Prägespaltes zwischen einer Prägewalze mit angestellter Gegendruckwalze auftretende Längsdehnung des Verbundmaterials in einem Bereich, der nicht zur Zerstörung des nur begrenzt elastisch längsdehnbaren Materials, beispielsweise einer Glasfaserschicht, führt. Da das Verbundmaterial nach Durchlaufen der Prägevorrichtung und dem Abbau der auftretenden Längszugkräfte bei elastischer Längsdehnung selbsttätig in den nach dem Verbinden, durch Auflaminieren oder Kaschieren, der ersten Materiallage auf die zweite Materiallage gebildeten Zustand entspannt, stellt sich in diesen Fällen nach dem Durchlaufen der Prägevorrichtung auch wieder die beim Verbindungsvorgang, d.h. Laminier- oder Kaschiervorgang, eingestellte Registerlänge des Druckbildes ein. Mittels entsprechender Mess- und/oder Sensortechnik kann die hier erfasste Registerlänge zur Regelung der Einstellung der Registerlänge beim Verbindungsvorgang, d.h. Laminier- oder Kaschiervorgang, verwendet werden.

Erfindungsgemäß wird also die das Druckbild in einer sich wiederholenden Registerlänge aufweisende bahnförmige erste Materiallage mit einer konstanten Registerlänge des Druckbildes auf der stabilisierenden zweiten Materiallage mittels insbesondere eines Laminiervorgangs verankert. Im nachfolgenden Prozessschritt des Registerprägens erfolgt dann lediglich eine nur noch geringe elastische oder plastische Längenanpassung des Verbundmaterials, derart, das Druckbildlänge und Prägebildlänge zumindest im Wesentlichen übereinstimmen, wobei sich bei einer elastischen Längsdehnung als Längenanpassung nach dem Prägevorgang wieder die Registerlänge des Druckbildes einstellt, die bei Beendigung des Verbindungsvorganges, d.h. Laminier- oder Kaschiervorgangs, eingestellt ist.

Das erfindungsgemäße Verfahren umfasst zur Herstellung eines registerhaltig geprägten, insbesondere laminierten, Verbundmaterials also die Schritte des zunächst in einem ersten Schritt durchgeführten kontrollierten Laminierens oder Kaschierens der ersten Materiallage mit einer gewünschten konstanten Registerlänge des darauf befindlichen Druckbildes auf eine diese stabilisierende zweite Materiallage und des in einem nachfolgenden zweiten Schritt erfolgenden registerhaltigen Prägens dieses mit einem Druckbild mit konstanter Registerlänge gebildeten Verbundmaterials. Diese beiden Prozessschritte können kontinuierlich in-line in einem kontinuierlichen Prozess, aber auch separat off-line diskontinuierlich in zwei aufeinanderfolgenden Prozessschritten oder Prozessstufen durchgeführt werden. Das erfindungsgemäße Verfahren kombiniert die Herstellung eines eine konstante Registerlänge eines Druckbildes aufweisenden Verbundmaterials mit dem nachfolgenden registerhaltigen Prägen. Es werden also bahnförmige Verbundmaterialien mit einer registerhaltigen Prägung hergestellt, die über ihre jeweilige Bahnlänge einerseits eine konstante Registerlänge des Druckbildes und andererseits eine registerhaltige Prägung aufweisen.

Insgesamt lassen sich das erfindungsgemäße Verfahren und die erfindungsgemäße Vorrichtung anlagentechnisch und regelungstechnisch aufwandsarm realisieren und handhaben. Für die Ausbildung des registerlängenkonstanten Aufbringens der ersten Materiallage auf die zweite Materiallage ist es lediglich notwendig, eine Möglichkeit bereitzustellen, die eine Längsdehnung der ersten Materiallage in einem solchen Maße längengesteuert variabel ermöglicht, dass beim Verbinden, Auflaminieren oder Aufkaschieren der ersten Materiallage auf die zweite Materiallage eine konstante Registerlänge des Druckbildes eingestellt ist. Dies lässt sich dadurch erreichen, dass die erste Materiallage variabel und längengesteuert zwischen zwei Festpunkten eingespannt oder gehalten ist, so dass die längengesteuerte Anpassung der Registerlänge durch elastische und/oder plastische Längsdehnung des Materials der ersten Materiallage ermöglicht wird. Die beiden Festpunkte können beispielsweise durch eine die erste Materiallage führende Vorheizwalze, gegebenenfalls mit dort angreifender Anpresswalze (erster Festpunkt), und eine Laminiertrommel (zweiter Festpunkt) gebildet sein. Ebenso ist es zur Einstellung der Registerhaltigkeit des Prägevorganges ausreichend, dass das durch das Laminieren oder Kaschieren gebildete Verbundmaterial zwischen zwei Festpunkten vorzugsweise reversibel, insbesondere elastisch oder plastisch durch Längsdehnung oder Schrumpfen längenanpassbar eingespannt oder gehalten ist, so dass eine elastische oder plastische Längenanpassung des Verbundmaterials derart erfolgen kann, dass die Registerlänge des Druckbildes auf die Länge des Prägebildes des Prägewerkzeuges, insbesondere auf den Umfang einer das Prägebild tragenden Prägewalze, längsgedehnt oder geschrumpft und in diesem Spannungszustand mittels einer vorzugsweise vorrapportierten Prägewalze registerhaltig geprägt werden kann. Auch in diesem Fall können die beiden Festpunkte einerseits von der Laminiervorrichtung, insbesondere einer Laminiertrommel, und andererseits von dem Prägewerkzeug, insbesondere einer Prägewalze mit zugeordneter Anpresswalze, gebildet sein. Insgesamt lässt sich durch diese längengesteuerte Anpassung der Registerlänge über die gesamte Bahnlänge des Verbundmaterials die Prägestruktur deckungsgleich zu dem Druckmuster auftragen oder aufprägen.

Hierbei ist es dann zweckmäßig, wenn die vorzugsweise reversible, insbesondere elastische, oder plastische Längenanpassung des Verbundmaterials vor der Prägevorrichtung derart eingestellt wird, dass die Registerlänge des Druckbildes zumindest annähernd der Länge des auf einem Prägewerkzeug der Prägevorrichtung ausgebildeten Prägebildes entspricht, was die Erfindung weiterhin vorsieht. Hierdurch kann die Registerlänge des Druckbildes in einem größeren Rahmen und über einen größeren Bereich variieren, da die Registerlänge des Druckbildes auf die Umfangslänge, d. h. den Umfang, einer Prägewalze eingestellt werden kann, wenn diese das Prägewerkzeug der Prägevorrichtung bildet, woraus ein geringer Anpassungsbedarf der Position und/oder Rotationsgeschwindigkeit der Prägewalze an die Registerlänge oder der Registerlänge durch Längsdehnung an die Prägebildlänge der Prägewalze resultiert.

Besonders vorteilhaft lässt sich das erfindungsgemäße Verfahren dann anwenden, wenn die erste Materiallage eine eine elastisch und/oder plastisch längsdehnbare bedruckte Folienschicht aufweisende, insbesondere aus dieser bestehende, Materialschicht und die zweite Materiallage eine nur begrenzt elastisch längsdehnbare Materialschicht, insbesondere Glasfaserschicht, aufweist.

Von Vorteil ist es gemäß erfindungsgemäßer Ausgestaltung der Erfindung weiterhin, wenn die erste Materiallage und die zweite Materiallage jeweils über ein Zuführwerkzeug, insbesondere über eine rotierende Vorheizwalze, geführt und zur Ausbildung des Verbundmaterials in der gewünschten Schichtfolge auf eine Laminier- oder Kaschiervorrichtung, insbesondere eine rotierende Laminiertrommel, aufgebracht werden, wobei die erste Materiallage längengesteuert auf ein gewünschtes Längenmaß längsgedehnt und unter Ausbildung einer gewünschten, konstanten Registerlänge des Druckbildes auf der Laminier- oder Kaschiervorrichtung, insbesondere der rotierenden Laminiertrommel, mit der zweiten Materiallage laminiert wird.

Hierbei lassen sich die Längsdehnung und die Einstellung der Registerlänge des Druckbildes besonders vorteilhaft dadurch realisieren, dass die elastische und/oder plastische Längsdehnung und Einstellung der konstanten Registerlänge des Druckbildes der ersten Materiallage durch Einstellung unterschiedlicher Rotationsgeschwindigkeiten von einer die erste Materiallage führenden ersten Vorheizwalze und der Laminiertrommel bewirkt wird, wodurch sich die Erfindung ebenfalls auszeichnet.

Mit dem erfindungsgemäßen Verfahren lässt sich eine besondere Maßhaltigkeit der Registerlänge des Druckbildes einstellen, so dass die Erfindung in Weiterbildung vorsieht, dass eine Abweichung der konstanten Registerlänge des Druckbildes des Verbundmaterials von einem gewünschten Sollwert auf der Laminiertrommel von weniger als 2 mm, vorzugsweise weniger als 1 mm, insbesondere weniger als 0,5 mm, eingestellt wird.

Da sich mit dem erfindungsgemäßen Verfahren auch ein Laminat herstellen lässt, bei welchem das Druckbild noch durch eine abdeckende Schutz- und/oder Nutzschicht geschützt wird, zeichnet sich die Erfindung in weiterer Ausgestaltung dadurch aus, dass auf die erste Materiallage eine Schutz- und/oder Nutzschicht aufgebracht wird, insbesondere auf der Laminier- oder Kaschiervorrichtung, vorzugsweise der Laminiertrommel, zur Bildung des Verbundmaterials die erste Materiallage mit einer vorher über ein drittes Zuführwerkzeug, insbesondere eine dritte Vorheizwalze, geführten, eine Schutz- und/oder Nutzschicht ausbildenden, zumindest begrenzt elastisch längsdehnbaren dritten Materiallage laminiert oder kaschiert wird.

Das nachfolgende registerhaltige Prägen des laminierten oder kaschierten Verbundmaterials lässt sich dadurch realisieren, dass das auf der Laminier- oder Kaschiervorrichtung, insbesondere der Laminiertrommel gebildete Verbundmaterial unter der längengesteuert die Registerlänge des Druckbildes des Verbundmaterials an die Länge des auf einem Prägewerkzeug der Prägevorrichtung ausgebildeten Prägebildes einstellenden, vorzugsweise reversiblen, insbesondere elastischen oder plastischen Längenanpassung des Verbundmaterials der, insbesondere eine Prägewälze als Prägewerkzeug aufweisenden Prägevorrichtung zugeführt und in der Prägevorrichtung registerhaltig geprägt wird, was die Erfindung ebenfalls vorsieht.

Als weiteren besonderen Vorteil weist das erfindungsgemäße Verfahren die Möglichkeit auf, das beim Auflaminieren der das Druckbild aufweisenden ersten Materiallage eine erste Längsdehnung erfolgt und nachher beim registerhaltigen Prägen eine nur noch geringfügige zusätzliche Längsdehnung notwendig wird, so dass sich die Erfindung weiterhin dadurch auszeichnet, dass bei einer elastischen und/oder plastischen Längsdehnung des Verbundmaterials die bereits zuvor elastisch und/oder plastisch längsgedehnte erste Materiallage einer weiteren zusätzlichen elastischen oder plastischen Längsdehnung unterworfen wird.

Damit das Verbundmaterial nach dem registerhaltigen Prägen wieder den nach dem Laminiervorgang oder dem Laminieren vorhandenen Zustand einnimmt, sieht die Erfindung weiterhin vor, dass das im Register geprägte, reversibel, vorzugsweise elastisch, längsgedehnte Verbundmaterial nach Durchlaufen der Prägevorrichtung wieder auf die in der Laminier- oder Kaschiervorrichtung, insbesondere die auf der Laminiertrommel, eingestellte Registerlänge des Druckbildes entspannt wird.

Ein für die Durchführung des erfindungsgemäßen Verfahrens besonders vorteilhaftes Prägewerkzeug stellen Prägewalzen dar. Die Erfindung zeichnet sich daher in weiterer Ausgestaltung dadurch aus, dass die registerhaltige Prägung mittels einer eine Prägewalze aufweisenden Prägevorrichtung durchgeführt wird und die beim Laminieren an der Laminier- oder Kaschiervorrichtung, insbesondere der Laminiertrommel, eingestellte Registerlänge zumindest annähernd gleich dem, insbesondere geringfügig kürzer als der Umfang der Prägewalze eingestellt wird.

Eine Ausbildung einer gewünschten, lediglich unvollständig an die Länge des Prägebildes angepassten Längsdehnung der ersten Materiallage und der dadurch erzielten Registerlänge des Druckbildes lässt sich vorteilhaft dadurch erreichen, dass eine solche Differenzrotationsgeschwindigkeit zwischen der die erste Materiallage führenden ersten Vorheizwalze und der Laminiertrommel eingestellt wird, dass das Druckbild auf der Laminiertrommel konstant mit einer Registerlänge auf die zweite Materiallage (auf)laminiert wird, die geringfügig kürzer als der Umfang der Prägewalze ist. Dieser lediglich Vor-dehnung des Druckbildes folgt dann später beim registerhaltigen Prägen die notwendige Nachdehnung der Registerlänge auf die Prägebildlänge.

Das erfindungsgemäße Verfahren wird zweckmäßigerweise mit einer derartigen Genauigkeit durchgeführt, dass beim (Auf)laminieren der ersten Materiallage auf die zweite Materiallage eine konstante Registerlänge des Druckbildes eingestellt wird, die weniger als 1%, vorzugsweise weniger als 0,3 %, kürzer als die Prägebildlänge und/oder der Umfang der Prägewalze ist.

Ebenso lässt sich in Ausgestaltung des erfindungsgemäßen Verfahrens ein registerhaltiges Prägen einstellen, das sich dadurch auszeichnet, dass eine Registerhaltigkeit von Druckbild und Prägung mit einer Abweichung der Prägung vom Druckbild, insbesondere der konstanten Registerlänge des Druckbildes, des Verbundmaterials von weniger als 2 mm, vorzugsweise weniger als 1 mm, insbesondere von weniger als 0,5 mm, eingestellt wird.

Ein zur Ausbildung einer begrenzt elastisch längsdehnbaren Materialschicht der zweiten Materiallage geeignetes Material ist durch eine relativ geringe Verformbarkeit bis zu seiner Reißgrenze gekennzeichnet. Die Erfindung zeichnet sich daher weiterhin dadurch aus, dass zur Ausbildung einer begrenzt elastisch längsdehnbaren Materialschicht der zweiten Materiallage ein Material eingesetzt wird, das bis zu seiner Reißgrenze eine Verformbarkeit von weniger als 5 %, vorzugsweise weniger als 2 %, insbesondere weniger als 1 %, aufweist.

Insbesondere sollte dieses Material eine Zugfestigkeit von mehr als 3 N/mm² aufweisen, so dass die Erfindung weiterhin vorsieht, dass zur Ausbildung einer begrenzt elastisch längsdehnbaren Materialschicht der zweiten Materiallage ein Material eingesetzt wird, das eine Zugfestigkeit von mehr als 3 N/mm² aufweist.

Um sowohl die Registerhaltigkeit des Prägebildes als auch die Registerlänge des der Prägevorrichtung mit dem Verbundmaterial vorgelegten Druckbildes erfassen zu können, zeichnet sich die Erfindung weiterhin dadurch aus, dass die Registerlänge des Druckbildes des geprägten Verbundmaterials mittels in Fertigungsrichtung nach einer Längsdehnungsentspannung des geprägten Verbundmaterials hinter der Prägevorrichtung angeordneten Bahn-Bahn-Sensoren gemessen wird.

Diese Anordnung ist insbesondere bei begrenzten Platzverhältnissen vorteilhaft. Es ist natürlich auch möglich, dass eine Messung für die Regelung der Registerlänge des Druckfilms vor der Längsdehnung oder Längung des Druckfilms (unmittelbar vor der Vorheizwalze) und die Kontrolle der Registerlänge des Verbundmateriales direkt hinter der Laminierung erfolgen.

Besonders gut ist ein mit dem erfindungsgemäßen Verfahren hergestelltes, insbesondere laminiertes, geprägtes Verbundmaterial als Oberflächenmaterial eines Fußbodenlaminates, eines Wand- oder Bodenfliesenlaminates oder einer Oberfläche eines Gebrauchsgegenstandes verwendbar.

Schließlich zeichnet sich die erfindungsgemäße Vorrichtung auch noch dadurch aus, dass sie in Fertigungsrichtung des registerhaltig geprägten laminierten Verbundmaterials hinter der Prägevorrichtung die Registerlänge des Druckbildes des Verbundmaterials messende Bahn-Bahn-Sensoren aufweist.

Die Erfindung ist nachstehend anhand der Zeichnung beispielhaft näher erläutert. Diese zeigt in
- Fig. 1: in schematischer Querschnittsdarstellung eine Vorrichtung zur Durchführung des erfindungsgemäßen Verfahrens und in
- Fig. 2: in schematischer Querschnittsdarstellung den Aufbau eines erfindungsgemäß laminierten Verbundmaterials.

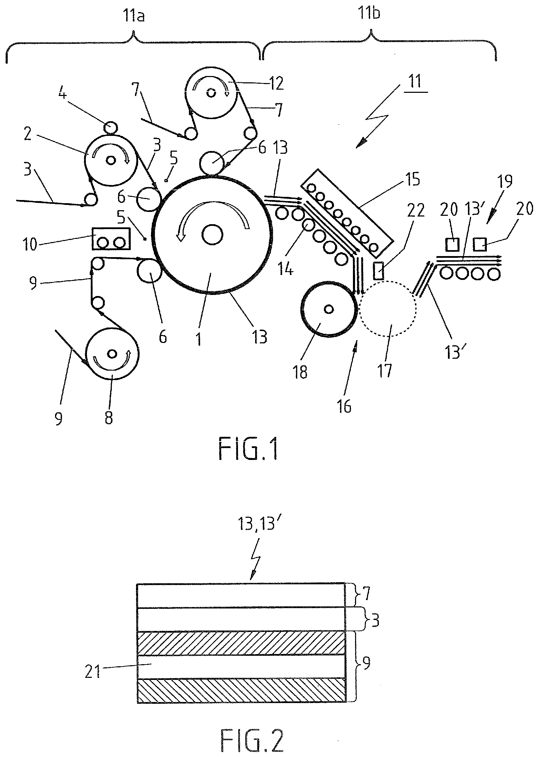

Kernelement in der in Fig. 1 schematisch dargestellten Anlage 11 zur Herstellung eines registerhaltig geprägten, laminierten Verbundmaterials 13 ist eine Laminier- oder Kaschiervorrichtung in Form einer Laminiertrommel 1. Dieser wird von einem ersten Zuführwerkzeug in Form einer ersten Vorheizwalze 2 eine elastisch längs dehnbare erste Materiallage 3 zugeführt. Mittels der ersten Vorheizwalze 2 wird diese erste Materiallage 3 auf eine gewünschte Temperatur aufgeheizt. An der ersten Vorheizwalze 2 liegt eine Anpresswalze 4 in die erste Materiallage 3 erfassender Weise an, so dass hierdurch ein die erste Materiallage 3 erfassender Festpunkt ausgebildet ist. Kurz vor dem Auftreffen der ersten Materiallage 3 auf die Laminiertrommel 1 ist ein Temperatursensor 5 angeordnet, mit welchem die Temperatur der zugeführten ersten Materiallage 3 messbar ist. Mittels einer Andrückrolle 6 wird die erste Materiallage 3 an die Laminiertrommel 1 oder wie im Ausführungsbeispiel auf eine bereits auf die Oberfläche der Laminiertrommel 1 aufgebrachte dritte Materiallage 7 gedrückt (zweiter Festpunkt). Der Laminiertrommel 1 ist weiterhin ein zweites Zuführwerkzeug in Form einer zweiten Vorheizwalze 8 zugeordnet, über welche eine zweite bahnförmige Materiallage 9 der Oberfläche der Laminiertrommel 1 zugeführt wird. Diese zweite Materiallage 9 wird mittels der zweiten Vorheizwalze 8 und einem Infrarotfeld 10 auf eine gewünschte Temperatur erwärmt und dann mittels einer weiteren Andrückrolle 6 auf die bereits an der Laminiertrommel 1 anliegende erste Materiallage 3 auflaminiert. Die Temperatur der zweiten Materiallage wird mittels eines weiteren Temperatursensors 5 gemessen. Die insgesamt mit 11 bezeichnete Anlage oder Vorrichtung weist zudem ein drittes Zuführwerkzeug in Form einer dritten, der Laminiertrommel 1 zugeordneten Vorheizwalze 12 auf, über welche die dritte Materiallage 7 geführt und als erste Lage des auf der Laminiertrommel 1 gebildeten laminierten Verbundmaterials 13 mittels einer Andrückrolle 6 an die Oberfläche der Laminiertrommel 1 angelegt wird. Nachdem sich das laminierte Verbundmaterial 13 an der Oberfläche der Laminiertrommel 1 gebildet hat, wird das Verbundmaterial 13 von der Laminiertrommel 1 abgenommen, über eine Messwalze 14 geführt und nach dem Durchlaufen eines oder mehrerer Infrarotfelder 15 einer Prägevorrichtung 16 zugeführt. Die Prägevorrichtung 16 umfasst ein Prägewerkzeug in Form einer Prägewalze 17 und eine das Verbundmaterial 13 an die Prägewalze 17 andrückende Anpresswalze 18 (vierter Festpunkt), die zwischen sich einen das Verbundmaterial 13 aufnehmenden Prägespalt ausbilden. In der Prägevorrichtung 16 erfolgt ein registerhaltiges Prägen der Oberfläche des Verbundmaterials 13. Zu diesem Zweck ist eingangsseitig in der Prägevorrichtung 16 in Fertigungsrichtung vor der Prägewalze 17 ein Register- und/oder Druckmarken erfassender Sensor 22 angeordnet.

Nach dem Verlassen der Prägevorrichtung 16 wird das registerhaltig geprägte Verbundmaterial 13 einer Entspannungsstrecke 19 zugeführt, entlang welcher mittels zweier Bahn-Bahn-Sensoren 20 die Registerlänge des Druckbildes des im Falle einer vorhergehenden elastischen Längsdehnung des Verbundmaterials 13 zwischen Laminiertrommel 1 und Prägewalze 17 hier wieder entspannten, nicht mehr elastisch längsgedehnten Verbundmaterials 13' gemessen wird.

Mit der Anlage 11 lässt sich kontinuierlich in-line ein Verbundmaterial 13' herstellen, wobei in einem ersten Teilbereich 11a der Anlage eine konstante Registerlänge des auf der reversibel elastisch und/oder plastisch dehnbaren ersten Materiallage 3 aufgedruckten Druckbildes hergestellt und durch (Auf)laminieren der ersten Materiallage 3 in diesem Zustand auf die lediglich begrenzt elastisch dehnbare zweite Materiallage 9 die konstante Registerlänge des Druckbildes unter Ausbildung des Verbundmaterials 13 fixiert wird. Um dies zu erreichen, sind die Laminiertrommel 1 und die erste Vorheizwalze 2 zueinander abstandsveränderbar angeordnet und ausgebildet. Durch eine Abstandsveränderung lässt sich die erste Materiallage 3 zwischen der ersten Vorheizwalze 2 und dem Auftreffpunkt auf die Laminiertrommel 1 elastisch und/oder plastisch längsdehnen, wobei die Vorheizwalze 2 sich aufgrund ihrer Anordnung auf einer gegenüberliegenden Seite der Materiallage 3 gegensinnig zur Laminiertrommel 1 dreht. Die dazu notwendigen Festpunkte werden beispielsweise durch das Zusammenwirken der ersten Vorheizwalze 2 mit der Anpresswalze 4 (erster Festpunkt) und das Zusammenwirken der zugeordneten Andrückrolle 6 mit der Laminiertrommel 1 im Auftreffpunkt der ersten Materiallage 3 auf die Laminiertrommel 1 (zweiter Festpunkt) gebildet. Durch Veränderung des Abstandes dieser beiden Festpunkte lässt sich die erste Materiallage 3 elastisch längsdehnen oder entspannen und/oder plastisch längsdehnen. Die hier eingestellte elastische und/oder plastische Längsdehnung erfolgt derart, dass das durch vorhergehende Prozesse eventuell ungleichmäßig lange Druckbild auf eine gewünschte, einheitliche, über die Bahnlänge konstante Registerlänge eingestellt wird. Dies erfolgt insofern längengesteuert als die gewünschte Registerlänge durch entsprechende elastische und/oder plastische Längsdehnung der ersten Materiallage 3 eingestellt wird. Insofern wird dieser Prozess als registerlängengesteuerte reversible, elastische und/oder plastische Längsdehnung der ersten Materiallage 3 bezeichnet. Als reversibel wird diese Längsdehnung bezeichnet, weil im zweiten Teilbereich 11b der Anlage 11 diese Längsdehnung beispielsweise in Form einer Längenanpassung durch einen Schrumpfprozess zumindest teilweise auch wieder zurückgenommen werden kann. Eine solche registerlängengesteuerte elastische und/oder plastische Längsdehnung kann aber auch dadurch erfolgen, dass die Rotationsgeschwindigkeiten von erster Vorheizwalze 2 und Laminiertrommel 1 derart unterschiedlich eingestellt werden, dass sich eine entsprechende elastische und/oder plastische Längsdehnung zwischen den beiden Festpunkten ergibt. Hierbei ergibt sich eine weitere mögliche Einflussnahme auf die Längsdehnung der ersten Materiallage 3 auch dadurch, dass die Laminiertrommel 1 und die erste Vorheizwalze 2 mit gegenläufigen Drehrichtungen betrieben werden. Die jeweils eingestellte gewünschte konstante Registerlänge des Druckbildes der ersten Materiallage 3 wird dann durch (Auf)laminieren dieser ersten Materiallage 3 auf die lediglich begrenzt elastisch längsdehnbare und stabilisierend wirkende zweite Materiallage 9 fixiert und quasi eingefroren. Als Endprodukt verlässt dann ein laminiertes Verbundmaterial 13 die Laminiertrommel 1, das durch eine über die gesamte Bahnlänge konstante Registerlänge des Druckbildes gekennzeichnet ist.

Da es auch bei einer gewünschten konstanten Registerlänge des Druckbildes aufgrund von Anlagenunzulänglichkeiten oder aber auch bewusst durch gezielte Maßnahmen so sein kann, dass die eingestellte konstante Registerlänge des Verbundmaterials 13 nicht exakt mit der Länge des in der Prägevorrichtung 16 vorhandenen Prägebildes übereinstimmt, müssen ergänzende Maßnahmen vorgenommen werden, die zu einer Anpassung zwischen der eingestellten konstanten Registerlänge des Druckbildes und der Länge des Prägebildes der Prägevorrichtung 16 führen, um in der Prägevorrichtung 16 ein registerhaltiges Prägen zu erreichen. Im vorliegenden Ausführungsbeispiel soll also dafür Sorge getragen werden, dass eine gegebenenfalls nicht dem Umfang der Prägewalze 17 entsprechende Registerlänge des Druckbildes an die Umfangslänge der Prägewalze 17 und damit die Länge des Prägebildes noch angepasst wird. Alternativ kann auch die Länge des Prägebildes beispielsweise durch Änderungen der Rotationsgeschwindigkeit der Prägewalze 17 an die Registerlänge des Druckbildes angepasst werden. Diese Maßnahme wird im zweiten Teilbereich 11b der Anlage oder Vorrichtung 11 im Bereich zwischen der Laminiertrommel 1 und der Prägewalze 17 durchgeführt. Beim Ausführungsbeispiel wird dies durch eine längengesteuerte Längenanpassung der Registerlänge des Druckbildes in Form einer elastischen Längsdehnung des Verbundmaterials 13 erreicht, mittels welcher Längenanpassung, hier Längsdehnung, die Registerlänge des Druckbildes an die Länge des Prägebildes auf der Prägewalze 17 angepasst wird. Die hierzu notwendigen Festpunkte werden einmal durch die Laminiertrommel 1 und/oder die zugeordnete Messwalze 14 (dritter Festpunkt) und andererseits durch die Prägewalze 17 mit daran anpressender Anpresswalze 18 (vierter Festpunkt) gebildet. Durch abstandsveränderliche/abstandsveränderbare Anordnung und Ausbildung von Laminiertrommel 1 und Prägevorrichtung 16, d. h. insbesondere der Prägewalze 17 mit zugeordneter Anpresswalze 18, lässt sich das Verbundmaterial 13 zwischen diesen beiden Festpunkten elastisch längsdehnen und dadurch die Registerlänge des Druckbildes an die Länge des Prägebildes anpassen. Die elastische Längenanpassung in Form einer Längsdehnung des Verbundmaterials 13 im Anlagenbereich 11 b kann eine geringere als die elastische und/oder plastische Längsdehnung der ersten Materiallage 3 im Anlagenbereich 11a sein. Bei einer lediglich elastischen Dehnung wird die erste Materiallage 3 in dem ersten Anlagenbereich 11 a quasi vorgedehnt, so dass im Anlagenbereich 11 b nur noch eine geringere oder geringe Restdehnung zur Anpassung der Registerlänge des Druckbildes an die Prägebildlänge notwendig ist. In dem Anlagenbereich 11b kann die elastische Längsdehnung des Verbundmaterials 13 aber auch dadurch eingestellt werden, dass die Laminiertrommel 1 und die Prägewalze 17 - die sich im Ausführungsbeispiel gleichsinnig drehen - mit voneinander abweichenden Rotationsgeschwindigkeiten und/oder mit gegenläufigen Drehrichtungen betrieben werden. Da das nach Durchlaufen der Prägewalze 17 registerhaltig geprägte Verbundmaterial 20 danach in der Entspannungsstrecke 19 aufgrund der inneren Rückstellkräfte aus dem elastischen Dehnungszustand wieder in den beim Verlassen der Laminiertrommel 1 vorhandenen Spannungszustand entspannt, entspricht die mit den Bahn-Bahn-Sensoren 20 gemessene Registerlänge der Druckbilder genau der Registerlänge, die in dem Verbundmaterial 13 am Ende des Anlagenbereiches 11a nach dem oder beim Verlassen der Laminiertrommel 1 ausgebildet ist. Dies ermöglicht es, mit Hilfe der Bahn-Bahn-Sensoren 20 eine Regelung vorzunehmen, die auf die elastische und/oder plastische Längsdehnung der ersten Materiallage 3 einwirkt, so dass sich dann beim Verlassen der Laminiertrommel 1 und im Bereich der Bahn-Bahn-Sensoren 20 die gewünschte Registerlänge des Druckbildes einstellt.

Neben der vorstehend beschriebenen Längenanpassung in Form einer Längsdehnung kann im Anlagenbereich 11 b aber auch eine Längenanpassung in Form einer Längenverkürzung durch Schrumpfen des Verbundmaterials 13, d.h. die Durchführung eines Schrumpfprozesses, erfolgen. In diesem Fall wird dann das Verbundmaterial 13 mittels des mindestens einen Infrarotfeldes 15 einem solchen Temperatureinfluss ausgesetzt, dass das Kunststoffmaterial und/oder das Fasermaterial des Verbundmaterials 13 schrumpft.

Eine Längenanpassung in Form einer Verkürzung der Registerlänge des Druckbildes des Verbundmaterials 13 im Bereich zwischen der Laminiertrommel 1 und der Prägewalze 17 ist folglich außer durch eine elastische Rückstellung auch durch ein thermisches Schrumpfen unter Einwirkung des Infrarotfeldes 15 im Bereich des Rollenganges möglich. Die Längenanpassung des Verbundmaterials 13 wird auch in diesem Fall vorzugsweise mittels unterschiedlicher Walzendrehzahlen/Walzengeschwindigkeiten von Laminiertrommel 1 und Prägewalze 17 an dem dritten und dem vierten Festpunkt erreicht, wobei der Rückstellmechanismus zur Verkürzung der Registerlänge jedoch ein thermisches Schrumpfen und keine flexible Entspannung ist. Insofern umfasst die elastische oder plastische Längenanpassung als Rückstellmechanismus für die Rückstellung der Registerlänge des Druckbildes des Verbundmaterials 13 im Anlagenbereich sowohl eine elastische Rückstellung als auch ein thermisches Schrumpfen. Insofern bezieht sich die Erfindung auf eine elastische Längsdehnung, aber auch auf eine reversible Längenanpassung, beispielsweise mittels thermischen Schrumpfens des Verbundmaterials 13. Außer durch unterschiedliche Rotationsgeschwindigkeiten von Laminiertrommel 1 und Prägewalze 17, d.h. durch Einstellung einer gewünschten Differenzrotationsgeschwindigkeit, kann auch in diesem Fall die Längenanpassung mittels zueinander abstandsveränderbar oder abstandsveränderlich angeordneter Laminiertrommel 1 und Prägewalze 17 eingestellt werden.

Den schichtweisen Aufbau eines Verbundmaterials 13 zeigt die Fig. 2. Diese zeigt das aus erster Materiallage 3, zweiter Materiallage 9 und dritter Materiallage 7 hergestellte Verbundmaterial in Form eines LVT (Luxury Vinyl Tile)-Mehrschichtlaminates für die Verwendung als Oberflächenmaterial im Bereich Fußbodenbelag. Die nur begrenzt elastisch dehnbare zweite Materiallage 9 weist als diese Eigenschaft bestimmende, ebenfalls nur begrenzt elastisch dehnbare Schicht 21 eine zwischen zwei PVC(Polyvinylchlorid)-Schichten (jeweils Backing PVC 1200 µm) eingebundene Glasfaserschicht (Glasvlies 45 g/m²) auf. Die zweite Materiallage 9 ist insofern dreilagig ausgebildet, wohingegen die erste Materiallage 3 (Druckfilm 70 µm) und die dritte Materiallage 7 (Klarfilm 500 µm) jeweils einlagig als aus einer Materialschicht bestehend ausgebildet sind.

Ein solches, in Fig. 2 dargestelltes Verbundmaterial 13 wird mit der erfindungsgemäßen Vorrichtung 11 beispielsweise mittels Heißlaminierung auf der zentralen Laminiertrommel 1 hergestellt. Die zentrale Laminiertrommel 1 wird bei einem ersten Ausführungsbeispiel dabei auf eine Temperatur von 140°C eingestellt. Die nur begrenzt elastisch dehnbare zweite Materiallage 9 wird als dreilagiges Vorlaminat über die zweite Vorheizwalze 8 und das Infrarotfeld 10 vor der Andrückrolle 6 erwärmt und der Laminiertrommel 1 in 8-Uhr-Position zugeführt. Die elastisch und/oder plastisch längsdehnbare, das sich wiederholende Druckbild aufweisende erste Materiallage 3 wird über die Vorheizwalze 2 der Laminiertrommel 1 in 10-Uhr-Position zugeführt. Durch Veränderung der Relativgeschwindigkeit oder der Differenzrotationsgeschwindigkeit zwischen der Vorheizwalze 2 und der Laminiertrommel 1 lässt sich durch die längengesteuerte elastische und/oder insbesondere plastische Längsdehnung der ersten Materiallage 3 die gewünschte Registerlänge des Druckbildes in der ersten Materiallage 3 und nach deren Fixierung auf der zweiten Materiallage 9 mittels des Auflaminierens an der Laminiertrommel 1 damit dann auch die des laminierten Verbundmaterials 13 konstant einstellen. Die konstante Registerlänge im Verbundmaterial 13 wird über die in Fertigungsrichtung im Bereich hinter der Prägevorrichtung 16 angeordneten Bahn-Bahn-Sensoren 20 vermessen. Die vorzugsweise klare Nutzschicht der dritten Materiallage 7 wird über die dritte Vorheizwalze 12 geführt der Laminiertrommel 1 in 12-Uhr-Position zugeführt. Bei diesem ersten Ausführungsbeispiel können in Abhängigkeit von der Voreilung (Rotationsgeschwindigkeit) der Laminiertrommel 1 zur ersten Vorheizwalze 2 beispielsweise Registerlängen des Druckbildes zwischen 999 und 1008 mm eingestellt werden. Das laminierte Verbundmaterial 13 wird von der Laminiertrommel 1 abgenommen und über einen dem Infrarotfeld 15 zugeordneten Rollengang geführt aufgeheizt und dann längenangepasst in der Prägevorrichtung 16 registerhaltig geprägt. In diesem Ausführungsbeispiel wird mittels der Prägewalze 17 eine Holzstruktur auf das Verbundmaterial 13 aufgeprägt. Die Temperatur der Prägewalze 17 beträgt in diesem Fall 30°C und die Prägung erfolgt bei einer Oberflächentemperatur des Verbundmaterials 13 von ca. 150°C vor Eintritt in den Prägespalt zwischen der Prägewalze 17 und der Anpresswalze 18. Durch Variation der Rotationsgeschwindigkeit der Prägewalze 17 in Bezug auf die Rotationsgeschwindigkeit der Laminiertrommel 1 lässt sich die Länge des auf das Verbundmaterial 13 aufgeprägten Prägebildes verändern bzw. anpassen. Das Verbundmaterial 13 wird dabei im Ausführungsbeispiel vor der Prägevorrichtung 16 elastisch längsgedehnt und nach dem Prägevorgang wieder entspannt. Da es sich im Ausführungsbeispiel um einen elastischen Dehnungsvorgang handelt, ändert sich die Abmessung oder Dimension des Verbundmaterials vor und nach dem Prägevorgang nicht. An dieser Stelle soll darauf hingewiesen werden, dass die Erfindung zur Einhaltung der registerhaltigen oder registergenauen Prägung des Druckbildes sowohl die Maßnahme, dass die Länge des Prägebildes an die Länge des Druckbildes angepasst wird, als auch die Maßnahme, dass die Länge des Druckbildes an die Länge des Prägebildes, hier an den Umfang der Prägewalze, angepasst wird, umfasst. Diese beiden Anpassungsmaßnahmen werden mit der vorher erfolgenden Herstellung eines Verbundmaterials mit einer konstanten Registerlänge des Druckbildes jeweils kombiniert, ggf. auch überlagert, durchgeführt.

In einem zweiten Ausführungsbeispiel werden auf die gleiche Art und Weise zur Ausbildung des Verbundmaterials 13 in der gewünschten Schichtfolge wie vorher beschrieben die erste bis dritte Materiallage 3, 9, 7 auf die rotierende Laminiertrommel 1 aufgebracht. Hierbei wird allerdings die Differenzrotationsgeschwindigkeit zwischen der ersten Vorheizwalze 2 und der Laminiertrommel 1 derart eingestellt, dass die Registerlänge des Druckbildes der ersten Materiallage 3 konstant auf eine Länge eingestellt wird, die 5 mm geringer als die Umfangslänge der Prägewalze 17 ist. Das dermaßen nach dem Laminieren hergestellte Verbundmaterial 13 wird dann ebenfalls wie vorstehend beschrieben der Prägewalze 17 mit einer Oberflächentemperatur von ca. 160°C zugeführt und bei einer Temperatur der Prägewalze 17 von 30°C mit einer Karostruktur geprägt. Die Position der Rapportmarken des Druckbildes der ersten Materiallage 3 im Verhältnis zur Position der Prägewalze 17 wird mittels eines oder mehrerer vor dem Eintritt des Verbundmaterials 13 in den Prägespalt der Prägewalze 17 angeordneten Sensoren 22 detektiert. Die durch den oder die Sensor(en) 22 erzeugten Signale werden zur Regelung der Rotationsgeschwindigkeit der Prägewalze 17 verwendet. Insofern sind also auch übliche aus dem Stand der Technik bekannte Druck- und Rapportmarken auf dem Verbundmaterial 13 vorhanden.

Insgesamt werden durch die Erfindung ein Verfahren und eine Vorrichtung bereitgestellt, bei welchen bereits während der Durchführung des Laminierprozesses der einzelnen Materiallagen 3, 7, 9 gewährleistet wird, dass das Druckbild mit der gewünschten "richtigen" und konstanten Registerlänge in dem Verbundmaterial 13 eingebettet wird. Die genaue Einstellung der Registerlänge wird dabei vorzugsweise durch eine präzise Geschwindigkeitsregulierung der ersten Vorheizwalze 2 in Relation zur Laminiertrommel 1 erreicht, wodurch die gewünschte längengesteuerte elastische und/oder vorzugsweise plastische Längsdehnung eingestellt wird. Des Weiteren erfolgt dann das registerhaltige Prägen nach vorhergehender elastischer oder plastischer Längenanpassung in Form einer Längsdehnung als Verlängerung oder in Form eines Schrumpfens als Verkürzung der Materialbahn aus Verbundmaterial 13, um dadurch die Registerlänge des Druckbildes an die Registerlänge oder Länge des Prägebildes des Prägewerkzeuges anzupassen. Bei einer elastischen Längsdehnung des Verbundmaterials 13 erfolgt dies beispielsweise durch eine Geschwindigkeitsüberlagerung durch die Prägewalze 17. Bei im Vergleich zur Bahngeschwindigkeit des Verbundmaterials 13 höherer Rotationsgeschwindigkeit der Prägewalze 17 erfolgt in diesem Fall eine elastische Längsdehnung des Verbundmaterials 13 zwischen einem vorgelagerten Festpunkt (Laminiertrommel 1), dem dritten Festpunkt, und der Prägewalze 17 (vierter Festpunkt). Eine Registerregelung der Vorrichtung oder Anlage 11 steuert dann diese Längsdehnung derart, dass das Druckbild im Verbundmaterial 13 eine Rapportlänge aufweist, die gleich dem Umfang der Prägewalze 17 ist. Durch eine zu den Rapportmarken des Druckbildes passende Einstellung der Rotationsgeschwindigkeit der Prägewalze 17 wird eine Überlagerung der Rapportmarken - die wie bei üblichen, aus dem Stand der Technik bekannten Verfahren vorhanden sind - von Druckbild und Prägewalze 17 erreicht. In Fertigungsrichtung hinter der Prägewalze 17 stellt sich das im Register geprägte, elastisch längsgedehnte Verbundmaterial 13' wieder auf das Längenmaß nach der Laminierung beim Verlassen der Laminiertrommel 1 zurück. Das nun registerhaltig geprägte Verbundmaterial 13' weist folglich eine registerhaltige Prägung bei konstanter Registerlänge des Druckbildes auf.

Auch wenn sich das Ausführungsbeispiel auf das Laminieren von erster bis dritter Materiallage 3, 7, 9, insbesondere mittels eines Thermoprozesses, bezieht, so ist die Erfindung hierauf nicht beschränkt und auch beim Verbinden mittels Kaschieren anwendbar.

Die Längsdehnung oder Längung des Druckfilms, d.h. die Längsdehnung oder Längung der das Druckbild aufweisenden Materiallage 3, im Bereich zwischen der Vorheizwalze 2 und der Laminiertrommel 1 erfolgt vorzugsweise nicht elastisch, sondern plastisch. Insbesondere stellt sich in der Praxis fast ausschließlich eine plastische Längsdehnung des Druckfilms in der Nähe zur heißen Laminiertrommel 1 ein. Dieses ist für das Verfahren vorteilhaft, da bei elastischer Verformung des Druckfilms Spannungen in das laminierte Verbundmaterial 13 aufgrund von inneren Rückstellkräften und/oder Rückstellmomenten des Druckfilms eingebracht werden. Dieser Nachteil schließt allerdings eine (lediglich) elastische Verformung des Druckfilms nicht aus, so dass die Beschreibung und das Schutzbegehren nicht auf eine diesbezügliche Spezifizierung des Druckfilms beschränkt sind, sondern sowohl eine plastische als auch eine elastische (plastisch und/oder elastisch) Längung oder längengesteuerte Längsdehnung umfassen.

Im Ausführungsbeispiel werden die Einstellung der Längung oder Längsdehnung des Druckfilms und der Längung oder Längsdehnung des Verbundmateriales insbesondere durch eine Lageveränderung der jeweiligen Fixpunkte bzw. Festpunkte beschrieben. Bei einem kontinuierlichen Prozess ist dies allerdings nicht die optimale Vorgehensweise. Hier ist eher die Einstellung der längengesteuerten Längsdehnung mittels Drehzahländerungen der Laminiertrommel 1 und der zugeordneten Vorheizwalze 2 und/oder der Prägewalze 17 von Vorteil.

## Patentansprüche

1. Verfahren zur Herstellung eines registerhaltig geprägten Verbundmaterials (13'), umfassend das Laminieren oder Kaschieren mindestens zweier bahnförmiger Materiallagen (3, 9) zu einem Verbundmaterial (13) in einer Laminier- oder Kaschiervorrichtung und ein nachfolgendes registerhaltiges Prägen des Verbundmaterials (13) in einer Prägevorrichtung (16) durch welche das Verbundmaterial (13) hindurchgeführt wird, wobei eine erste, ein sich nach einer Registerlänge wiederholendes Druckbild aufweisende Materiallage (3) mit einer die erste Materiallage (3) stabilisierenden zweiten Materiallage (9) zu dem Verbundmaterial (13) laminiert oder kaschiert wird, wobei in einer ersten Stufe mittels einer registerlängengesteuerten elastischen und/oder plastischen Längsdehnung der ersten Materiallage (3) das sich wiederholende Druckbild der ersten Materiallage (3) auf eine gewünschte, über die Bahnlänge der ersten Materiallage (3) konstante Registerlänge eingestellt und durch ein fixierendes Laminieren oder Kaschieren der derart längsgedehnten ersten Materiallage (3) mit der stabilisierenden zweiten Materiallage (9) das Verbundmaterial (13) mit einem über seine Bahnlänge die gewünschte konstante Registerlänge aufweisenden Druckbild hergestellt wird, und wobei dem Druckbild des Verbundmaterials (13) in der Prägevorrichtung (16) registerhaltig ein Prägebild aufgeprägt wird,
**dadurch gekennzeichnet,**
**dass** das Verbundmaterial (13) unter Einstellung einer nach der Laminier-oder Kaschiervorrichtung in einer zweiten Stufe durchgeführten weiteren elastischen oder plastischen Längenanpassung des im Verbundmaterial (13) fixierten Druckbildes an das Prägebild der Prägevorrichtung (16) zugeführt wird.

2. Verfahren nach Anspruch 1, **dadurch gekennzeichnet, dass** die Längenanpassung des Verbundmaterials (13) vor der Prägevorrichtung (16) derart eingestellt wird, dass die Registerlänge des Druckbildes zumindest annähernd der Länge des auf einem Prägewerkzeug der Prägevorrichtung (16) ausgebildeten Prägebildes entspricht.

3. Verfahren nach Anspruch 1 oder 2, **dadurch gekennzeichnet, dass** die erste Materiallage (3) eine elastisch und/oder plastisch längsdehnbare bedruckte Folienschicht aufweisende Materialschicht und die zweite Materiallage (9) eine nur begrenzt elastisch längsdehnbare Materialschicht (21) aufweist.

4. Verfahren nach einem der vorhergehenden Ansprüche, **dadurch gekennzeichnet, dass** die erste Materiallage (3) und die zweite Materiallage (9) jeweils über ein Zuführwerkzeug geführt und zur Ausbildung des Verbundmaterials (13) in der gewünschten Schichtfolge auf eine Laminier-oder Kaschiervorrichtung aufgebracht werden, wobei die erste Materiallage (3) längengesteuert auf ein gewünschtes Längenmaß längsgedehnt und unter Ausbildung einer gewünschten, konstanten Registerlänge des Druckbildes auf der Laminier- oder Kaschiervorrichtung mit der zweiten Materiallage (9) laminiert wird.

5. Verfahren nach Anspruch 4, **dadurch gekennzeichnet, dass** die elastische und/oder plastische Längsdehnung und Einstellung der konstanten Registerlänge des Druckbildes der ersten Materiallage (3) durch Einstellung unterschiedlicher Rotationsgeschwindigkeiten von einer die erste Materiallage (3) führenden ersten Vorheizwalze (2) und einer Laminiertrommel (1) bewirkt wird.

6. Verfahren nach Anspruch 4, **dadurch gekennzeichnet, dass** eine Abweichung der konstanten Registerlänge des Druckbildes des Verbundmaterials (13) von einem gewünschten Sollwert auf der Laminiertrommel (1) von weniger als 2 mm eingestellt wird.

7. Verfahren nach einem der vorhergehenden Ansprüche, **dadurch gekennzeichnet, dass** auf der Laminier- oder Kaschiervorrichtung auf die erste Materiallage (3) zur Bildung des Verbundmaterials (13) eine vorher über ein drittes Zuführwerkzeug geführte, eine Schutz- und/oder Nutzschicht ausbildende, zumindest begrenzt elastisch längsdehnbare dritte Materiallage (7) laminiert oder kaschiert wird.

8. Verfahren nach einem der vorhergehenden Ansprüche, **dadurch gekennzeichnet, dass** das Verbundmaterial (13) unter der längengesteuert die Registerlänge des Druckbildes des Verbundmaterials (13) an die Länge des auf einem Prägewerkzeug der Prägevorrichtung (16) ausgebildeten Prägebildes einstellenden Längenanpassung des Verbundmaterials (13) der Prägevorrichtung (16) zugeführt und in der Prägevorrichtung (16) registerhaltig geprägt wird.

9. Verfahren nach einem der vorhergehenden Ansprüche, **dadurch gekennzeichnet, dass** bei einer elastischen oder plastischen Längsdehnung des Verbundmaterials (13) die bereits zuvor elastisch und/oder plastisch längsgedehnte erste Materiallage (3) einer weiteren, zusätzlichen elastischen oder plastischen Längsdehnung unterworfen wird.

10. Verfahren nach einem der vorhergehenden Ansprüche, **dadurch gekennzeichnet, dass** das im Register geprägte, reversibel längsgedehnte Verbundmaterial (13') nach Durchlaufen der Prägevorrichtung (16) wieder auf die in der Laminier- oder Kaschiervorrichtung eingestellte Registerlänge des Druckbildes entspannt wird.

11. Verfahren nach einem der Ansprüche 8 - 10, **dadurch gekennzeichnet, dass** die registerhaltige Prägung mittels einer eine Prägewalze (17) aufweisenden Prägevorrichtung (16) durchgeführt wird und die beim Laminieren an der Laminier- oder Kaschiervorrichtung eingestellte Registerlänge zumindest annähernd gleich dem Umfang der Prägewalze (17) eingestellt wird.

12. Verfahren nach einem der Ansprüche 8 - 11, **dadurch gekennzeichnet, dass** eine solche Differenzrotationsgeschwindigkeit zwischen einer die erste Materiallage (3) führenden ersten Vorheizwalze (2) und der Laminiertrommel (1) eingestellt wird, dass das Druckbild auf der Laminiertrommel (1) konstant mit einer Registerlänge auf die zweite Materiallage (9) laminiert wird, die geringfügig kürzer als der Umfang der Prägewalze (17) ist.

13. Verfahren nach einem der Ansprüche 8 -12, **dadurch gekennzeichnet, dass** beim Laminieren der ersten Materiallage (3) auf die zweite Materiallage (9) eine konstante Registerlänge des Druckbildes eingestellt wird, die weniger als 1% kürzer als die Prägebildlänge und/oder der Umfang der Prägewalze (17) ist.

14. Verfahren nach einem der vorhergehenden Ansprüche, **dadurch gekennzeichnet, dass** eine Registerhaltigkeit von Druckbild und Prägung mit einer Abweichung der Prägung vom Druckbild des Verbundmaterials (13') von weniger als 2 mm eingestellt wird.

15. Verfahren nach einem der vorhergehenden Ansprüche, **dadurch gekennzeichnet, dass** zur Ausbildung einer begrenzt elastisch längsdehnbaren Materialschicht (21) der zweiten Materiallage (9) ein Material eingesetzt wird, das bis zu seiner Reißgrenze eine Verformbarkeit von weniger als 5 % aufweist.

16. Verfahren nach einem der vorhergehenden Ansprüche, **dadurch gekennzeichnet, dass** zur Ausbildung einer/der begrenzt elastisch längsdehnbaren Materialschicht (21) der zweiten Materiallage (9) ein Material eingesetzt wird, das eine Zugfestigkeit von mehr als 3 N/mm2 aufweist.

17. Verfahren nach einem der vorhergehenden Ansprüche, **dadurch gekennzeichnet, dass** die Registerlänge des Druckbildes des geprägten Verbundmaterials (13) mittels in Fertigungsrichtung nach einer Längsdehnungsentspannung des Verbundmaterials (13') hinter der Prägevorrichtung (16) angeordneten Bahn-Bahn-Sensoren (20) gemessen wird.

18. Verfahren nach einem der vorhergehenden Ansprüche, **dadurch gekennzeichnet, dass** als geprägtes Verbundmaterial (13') ein Oberflächenmaterial eines Fußbodenlaminats, eines Wand- oder Bodenfliesenlaminats oder einer Oberfläche eines Gebrauchsgegenstandes hergestellt wird.

19. Vorrichtung (11) zur Durchführung eines Verfahrens nach einem der Ansprüche 1-18, die eine Laminier- oder Kaschiervorrichtung mit mindestens zwei zugeordneten Zuführwerkzeugen aufweist, wobei in einer ersten Stufe über ein erstes Zuführwerkzeug eine elastisch und/oder plastisch längsdehnbare und ein sich nach einer Registerlänge wiederholendes Druckbild aufweisende erste Materiallage (3) unter einer registergesteuerten elastischen und/oder plastischen Längsdehnung auf eine konstante Registerlänge des Druckbildes einstellbar und der Laminier-oder Kaschiervorrichtung zuführbar ist und über ein zweites Zuführwerkzeug eine nur begrenzt elastisch längsdehnbare zweite Materiallage (9) geführt der Laminier- oder Kaschiervorrichtung zuführbar und in oder auf dieser unter Ausbildung eines Verbundmaterials (13) in eine gewünschte Übereinanderlage mit der ersten Materiallage (3) bringbar ist und wobei zumindest das erste Zuführwerkzeug und die Laminier- oder Kaschiervorrichtung zueinander abstandsveränderbar und/oder mit voneinander abweichenden Rotationsgeschwindigkeiten und/oder mit gegenläufigen Drehrichtungen betreibbar ausgebildet sind und wobei der Laminier- oder Kaschiervorrichtung eine ein Prägewerkzeug aufweisende Prägevorrichtung (16) zugeordnet ist, der das Verbundmaterial (13) zur registerhaltigen Prägung zuführbar ist, wobei die Laminier- oder Kaschiervorrichtung und das Prägewerkzeug zueinander abstandsveränderbar und/oder mit voneinander abweichenden Rotationsgeschwindigkeiten und/oder mit gegenläufigen Drehrichtungen betreibbar ausgebildet sind,
**dadurch gekennzeichnet,**
**dass** damit ein Verfahren durchführbar ist, bei welchem das Verbundmaterial (13) unter Einstellung einer nach der Laminier- oder Kaschiervorrichtung in einer zweiten Stufe durchgeführten weiteren elastischen oder plastischen Längenanpassung des im Verbundmaterial (13) fixierten Druckbildes an das Prägebild der Prägevorrichtung (16) zugeführt wird.

20. Vorrichtung nach Anspruch 19, **dadurch gekennzeichnet, dass** sie in Fertigungsrichtung des registerhaltig geprägten, laminierten Verbundmaterials (13') hinter der Prägevorrichtung (16) die Registerlänge des Druckbildes des geprägten Verbundmaterials (13') messende Bahn-Bahn-Sensoren (20) aufweist.

## Claims

1. Method for producing a composite material (13') that is embossed in register, involving the laminating or lining of at least two weblike material layers (3, 9) in a laminating device or lining device into a composite material (13) and subsequent embossing in register of the composite material (13) in an embossing device (16) through which the composite material (13) is taken, wherein a first material layer (3) having a printed pattern repeating after a register length is laminated or lined with a second material layer (9), stabilizing the first material layer (3), into the composite material (13), wherein in a first stage, the repeating printed pattern of the first material layer (3) is adjusted to a desired register length that is constant over the web length of the first material layer (3) by a register length-controlled elastic and/or plastic longitudinal extension of the first material layer (3) and the composite material (13) is produced by a fixing laminating or lining of the so length-stretched first material layer (3) with the stabilizing second material layer (9) with a printing pattern having the desired constant register length over its entire web length, and wherein an embossed pattern is embossed in register on the printed pattern of the composite material (13) in the embossing device (16), **characterized in that**
the composite material (13) is fed to the embossing device (16) with observance of a further elastic or plastic length adjustment of the printed pattern fixed in the composite material (13) to the embossed pattern, which is carried out in a second stage downstream from the laminating or lining device.

2. Method according to Claim 1, **characterized in that** the length adjustment of the composite material (13) is done upstream from the embossing device (16) so that the register length of the printed pattern corresponds at least approximately to the length of the embossed pattern formed on an embossing die of the embossing device (16).

3. Method according to Claim 1 or 2, **characterized in that** the first material layer (3) has a material layer having an elastically and/or plastically length-stretchable printed film layer, and the second material layer (9) has a material layer (21) with only limited elastic length-stretching ability.

4. Method according to one of the preceding claims, **characterized in that** the first material layer (3) and the second material layer (9) are each taken across a feed element and placed in the desired sequence of layers on a laminating or lining device, in order to form the composite material (13), wherein the first material layer (3) is length stretched to a desired lengthwise dimension under length control and is laminated with the second material layer (9) under formation of a desired constant register length of the printed pattern on the laminating or lining device.

5. Method according to Claim 4, **characterized in that** the elastic and/or plastic longitudinal expansion and adjustment of the constant register length of the printed pattern of the first material layer (3) is accomplished by setting different rotational speeds of a first preheating roller (2) guiding the first material layer (3) and a lamination drum (1).

6. Method according to Claim 4, **characterized in that** a deviation of the constant register length of the printed pattern of the composite material (13) from a desired nominal value on the lamination drum (1) of less than 2 mm is adjusted.

7. Method according to one of the preceding claims, **characterized in that** on the laminating or lining device the first material layer (3) to form the composite material (13) is laminated or lined with a third material layer (7) which has been guided across a third feeding element before and which has at least limited elastic length-stretching ability and forms a protection and/or wearing layer.

8. Method according to one of the preceding claims, **characterized in that** the composite material (13) is fed to the embossing device (16) under the length adjustment of the composite material (13) adjusting under length control the register length of the printed pattern of the composite material (13) to the length of the embossed pattern formed on an embossing die of the embossing device (16), and embossed in register in the embossing device (16).

9. Method according to one of the preceding claims, **characterized in that** the first material layer (3) already elastically or plastically length stretched during an elastic or plastic longitudinal expansion of the composite material (13) is subjected to a further additional elastic or plastic longitudinal expansion.

10. Method according to one of the preceding claims, **characterized in that** the register-embossed, reversibly length-stretched composite material (13') after passing through the embossing device (16) is once again relaxed to the register length of the printed pattern adjusted in the laminating or lining device.

11. Method according to one of Claims 8 to 10, **characterized in that** the embossing in register is carried out by means of an embossing device (16) having an embossing roller (17) and the register length adjusted during the lamination on the laminating or lining device is set at least approximately equal to the circumference of the embossing roller (17).

12. Method according to one of Claims 8 to 11, **characterized in that** a differential speed of rotation is adjusted between a first preheating roller (2) carrying the first material layer (3) and the lamination drum (1) so that the printed pattern on the lamination drum (1) is laminated constantly with a register length on the second material layer (9) which is slightly shorter than the circumference of the embossing roller (17).

13. Method according to one of Claims 8 to 12, **characterized in that** a constant register length of the printed pattern is adjusted during the laminating of the first material layer (3) onto the second material layer (9) which is less than 1% shorter than the embossed pattern length and/or the circumference of the embossing roller (17).

14. Method according to one of the preceding claims, **characterized in that** a register constancy of printed pattern and embossing is adjusted with a deviation of the embossing from the printed pattern of the composite material (13') of less than 2 mm.

15. Method according to one of the preceding claims, **characterized in that** a material is used to form a material layer (21) with limited elastic length expansibility of the second material layer (9) that has a deformability up to its tear limit of less than 5%.

16. Method according to one of the preceding claims, **characterized in that** a material is used to form a/the material layer (21) with limited elastic length expansibility of the second material layer (9) that has a tensile strength of more than 3 N/mm².

17. Method according to one of the preceding claims, **characterized in that** the register length of the printed pattern of the embossed composite material (13) is measured by means of web-to-web sensors (20) arranged in the production direction downstream from the embossing device (16) after a longitudinal expansion relaxation of the composite material (13').

18. Method according to one of the preceding claims, **characterized in that** as embossed composite material (13'), a surface material of a flooring laminate, a wall or floor tiling laminate, or a surface of a consumer article is produced.

19. Device (11) to carry out a method according to one of Claims 1-18, comprising a laminating or lining device with at least two coordinated feed elements, wherein, in a first stage, a first material layer (3) which is elastically and/or plastically length stretchable and which has a printed pattern repeating after a register length can be fed to the laminating or lining device via a first feed element and can be adjusted under a register-controlled elastic and/or plastic longitudinal extension to a constant register length of the printed pattern, and a second material layer (9) with only limited elastic length expansibility guided via a second feed element can be fed to the laminating or lining device and which can be placed in a desired superimposed position with the first material layer (3) in or on the latter to form a composite material (13) and wherein at least the first feed element and the laminating or lining device are configured to be able to operate with the ability to change the distance between each other and/or with rotation speed differing from each other and/or with opposite directions of rotation and wherein the laminating or lining device is coordinated with an embossing device (16) having an embossing die, to which the composite material (13) can be fed for embossing in register, while the laminating or lining device and the embossing die are configured to be able to operate with the ability to change the distance between each other and/or with rotation speed differing from each other and/or with opposite directions of rotation, **characterized in that** thereby a method can be carried out, in which the composite material (13) is fed to the embossing device (16) with observance of a further elastic or plastic length adjustment of the printed pattern fixed in the composite material (13) to the embossed pattern, which is carried out in a second stage downstream from the laminating or lining device.

20. Device according to Claim 19, **characterized in that** it has web-to-web sensors (20) in the production direction of the register-embossed laminated composite material (13') downstream from the embossing device (16) to measure the register length of the printed pattern of the embossed composite material (13').

## Revendications

1. Procédé pour la fabrication d'un matériau composite (13') estampé avec un repérage, comprenant le laminage ou le contrecollage d'au moins deux couches de matériau (3, 9) en forme de bandes afin d'obtenir un matériau composite (13) dans un dispositif de laminage ou de contrecollage puis l'estampage d'un repérage sur le matériau composite (13) dans un dispositif d'estampage (16) à travers lequel le matériau composite (13) est passé, une première couche de matériau (3) comprenant une image d'impression, qui se répète après une longueur de repérage, étant laminée ou contrecollée avec une deuxième couche de matériau (9) stabilisant la première couche de matériau (3), afin d'obtenir le matériau composite (13), dans une première étape, au moyen d'une extension de longueur élastique et/ou plastique, contrôlée par la longueur de repérage, de la première couche de matériau (3), l'image d'impression répétitive de la première couche de matériau (3) étant réglée sur la longueur de repérage constante sur la longueur de bande de la première couche de matériau (3), et par un laminage ou contrecollage de fixation, de la première couche de matériau (3) ainsi étendue en longueur, avec la deuxième couche de matériau (9) stabilisante, le matériau composite (13) étant fabriqué avec une image d'impression présentant, sur sa longueur de bande, la longueur de repérage constante souhaitée, et une image estampée étant estampée sur l'image d'impression du matériau composite (13) dans le dispositif d'estampage (16), **caractérisé en ce que**
le matériau composite (13) est introduit, en réglant une adaptation de longueur élastique ou plastique supplémentaire de l'image d'impression fixée dans le matériau composite (13) à l'image estampée, effectuée après le dispositif de laminage ou de contrecollage dans une deuxième étape, dans le dispositif d'estampage (16).

2. Procédé selon la revendication 1, **caractérisé en ce que** l'adaptation de longueur du matériau composite (13) est réglée avant le dispositif d'estampage (16) de façon à ce que la longueur de repérage de l'image d'impression corresponde à au moins approximativement la longueur de l'image d'estampage réalisée sur un outil d'estampage du dispositif d'estampage (16).

3. Procédé selon la revendication 1 ou 2, **caractérisé en ce que** la première couche de matériau (3) comprend une couche de matériau comprenant une couche de film imprimée et extensible en longueur de manière élastique et/ou plastique et la deuxième couche de matériau (9) comprenant une couche de matériau (21) extensible en longueur de manière élastique de manière uniquement limitée.

4. Procédé selon l'une des revendications précédentes, **caractérisé en ce que** la première couche de matériau (3) et la deuxième couche de matériau (9) sont guidées chacune à l'aide d'un outil d'alimentation et, pour la réalisation du matériau composite (13) avec la suite de couches souhaitée, appliquées sur un dispositif de laminage ou de contrecollage, la première couche de matériau (3) étant étendue en longueur, de manière contrôlée en longueur, jusqu'à une longueur souhaitée et étant laminée, en formant une longueur de repérage constante souhaitée de l'image d'impression, sur le dispositif de laminage ou de contrecollage, avec la deuxième couche de matériau (9).

5. Procédé selon la revendication 4, **caractérisé en ce que** l'extension de longueur élastique et/ou plastique et le réglage de la longueur de repérage constante de l'image d'impression de la première couche de matériau (3) étant provoquée par le réglage de différentes vitesses de rotation d'un premier rouleau de pré-chauffage (2) guidant la première couche de matériau (3) et d'un tambour de laminage (1).

6. Procédé selon la revendication 4, **caractérisé en ce qu'**un écart de la longueur de repérage constante de l'image d'impression du matériau composite (13) par rapport à une valeur de consigne souhaitée est réglé sur le tambour de laminage (1) est réglé à moins de 2 mm.

7. Procédé selon l'une des revendications précédentes, **caractérisé en ce que**, sur le dispositif de laminage ou de contrecollage, sur la première couche de matériau (3), pour la formation du matériau composite (13), une troisième couche de matériau (7), guidée préalablement par l'intermédiaire d'un troisième outil d'alimentation, extensible en longueur de manière élastique et au moins limitée, formant une couche protectrice et/ou fonctionnelle, est laminée ou contrecollée.

8. Procédé selon l'une des revendications précédentes, **caractérisé en ce que** le matériau composite (13) est introduit, avec l'adaptation de la longueur du matériau composite (13) à la longueur de l'image estampée réalisée sur l'outil d'estampage du dispositif d'estampage (16), qui règle la longueur de repérage de l'image d'impression du matériau composite (13), dans le dispositif d'estampage (16) et un repérage est estampé dans le dispositif d'estampage (16).

9. Procédé selon l'une des revendications précédentes, **caractérisé en ce que**, dans le cas d'une extension de longueur élastique ou plastique du matériau composite (13), la première couche de matériau (3) préalablement étendue de manière élastique et/ou plastique, est soumise à une extension élastique ou plastique supplémentaire.

10. Procédé selon l'une des revendications précédentes, **caractérisé en ce que** le matériau composite (13') étendu en longueur de manière réversible, estampé dans le repérage, est à nouveau détendu, après avoir traversé le dispositif d'estampage (16), à la longueur de repérage de l'image d'impression, réglée dans le dispositif de laminage ou de contrecollage.

11. Procédé selon l'une des revendications 8 à 10, **caractérisé en ce que** l'estampage du repérage est effectué au moyen d'un dispositif d'estampage (16) comprenant un rouleau d'estampage (17) et la longueur de repérage réglée lors du laminage dans le dispositif de laminage ou de contrecollage est réglée de façon à être au moins égale à la circonférence du rouleau d'estampage (17).

12. Procédé selon l'une des revendications 8 à 11, **caractérisé en ce qu'**une vitesse de rotation différentielle est réglée entre le premier rouleau de pré-chauffage (2) guidant la première couche de matériau (3) et le tambour de laminage (1), de façon à ce que l'image d'impression soit laminée de manière constante sur le tambour de laminage (1) avec une longueur de repérage sur la deuxième couche de matériau (9), qui est un peu plus courte que la circonférence du rouleau d'estampage (17).

13. Procédé selon l'une des revendications 8 à 12, **caractérisé en ce que**, lors du laminage de la première couche de matériau (3) sur la deuxième couche de matériau (9), une longueur de repérage constante de l'image d'impression est réglée, qui est moins de 1 % plus courte que la longueur de l'image d'impression et/ou que la circonférence du rouleau d'estampage (17).

14. Procédé selon l'une des revendications précédentes, **caractérisé en ce qu'**un repérage de l'image d'impression et de l'estampage est réglé avec un écart de l'estampage par rapport à l'image d'impression du matériau composite (13') de moins de 2 mm.

15. Procédé selon l'une des revendications précédentes, **caractérisé en ce que**, pour la réalisation d'une couche de matériau (21), extensible en longueur de manière élastique et limitée, de la deuxième couche de matériau (9), un matériau est utilisé, qui présente jusqu'à sa limite de déchirure, une capacité de déformation inférieure à 5 %.

16. Procédé selon l'une des revendications précédentes, **caractérisé en ce que**, pour la réalisation d'une ou de la couche de matériau (21), extensible en longueur de manière élastique et limitée, de la deuxième couche de matériau (9), un matériau est utilisé, qui présente une résistance à la traction supérieure à 3 N/mm².

17. Procédé selon l'une des revendications précédentes, **caractérisé en ce que** la longueur du repérage de l'image d'impression du matériau composite (13) estampé est mesurée au moyen de capteurs de bandes (20) disposés dans la direction de fabrication après une détente d'extension de longueur du matériau composite (13') derrière le dispositif d'estampage (16).

18. Procédé selon l'une des revendications précédentes, **caractérisé en ce que**, en guise de matériau composite (13') estampé, un matériau de surface d'un stratifié de sol, d'un stratifié de mur ou de carrelage ou d'une surface d'un objet usuel est fabriqué.

19. Dispositif (11) pour la réalisation d'un procédé selon l'une des revendications 1 à 18, qui comprend un dispositif de laminage ou de contrecollage avec au moins deux outils d'alimentation correspondants, dans une première étape, par l'intermédiaire d'un premier outil d'alimentation, une première couche de matériau (3), comprenant une image d'impression se répétant après une longueur de repérage, pouvant être réglée, grâce à une extension élastique et/ou plastique contrôlée par le repérage, à une longueur de repérage constante de l'image d'impression et pouvant être introduite dans le dispositif de laminage ou de contrecollage et, par l'intermédiaire d'un deuxième outil d'alimentation, une deuxième couche de matériau (9), extensible en longueur de manière élastique et limitée, pouvant être introduite de manière guidée dans le dispositif de laminage ou de contrecollage et peut être mise en contact, dans ou sur ce dispositif, en formant un matériau composite (13), afin de former une superposition souhaitée, avec la première couche de matériau (3) et au moins le premier outil d'alimentation et le dispositif de laminage ou de contrecollage étant conçus de façon à pouvoir fonctionner avec des distances variables entre eux et/ou avec des vitesses de rotations différentes entre elles et/ou avec des sens de rotation opposés entre eux et, au dispositif de laminage ou de contrecollage, correspond un dispositif d'estampage (16), comprenant un outil d'estampage, dans lequel le matériau composite (13) peut être introduit pour l'estampage d'un repérage, le dispositif de laminage ou de contrecollage et l'outil d'estampage étant conçus de façon à pouvoir fonctionner avec des distances variables entre eux et/ou avec des vitesses de rotations différentes entre elles et/ou avec des sens de rotation opposés entre eux,
**caractérisé en ce que**
un procédé peut ainsi être mise en oeuvre, dans lequel le matériau composite (13) est introduit, avec un réglage d'une adaptation de longueur, élastique ou plastique supplémentaire effectué dans une deuxième étape après le dispositif de laminage ou de contrecollage, de l'image d'impression fixée dans le matériau composite (13) à l'image estampée du dispositif d'estampage (16).

20. Dispositif selon la revendication 19, **caractérisé en ce qu'**il présente, dans la direction de fabrication du matériau composite (13') laminé, avec estampage d'un repérage, derrière le dispositif d'estampage (16), des capteurs de bandes (20) mesurant la longueur de repérage de l'image d'impression du matériau composite estampé (13').
